# EUROPEAN PATENT APPLICATION

(11) **EP 3 705 252 A1**
(43) Date of publication of application: **09.09.2020**
(21) Application number: 20160764.5
(22) Date of filing: 03.03.2020
(51) Int. Cl.: B29B 17/00, B29B 17/04, B29C 49/42, B29C 49/00, B29C 49/04, B29L 31/00

(54) **PROCESS FOR PRODUCING A PLASTIC MATERIAL FROM WASTE AND PROCESS FOR PRODUCING PACKAGING PRODUCTS THEREFROM**

(30) Priority: 04.03.2019 IT 201900003093
(71) Applicant: Sacchini, Fabrizio, 64025 Pineto, Teramo (IT); Sacchini, Luca, 64025 Pineto, Teramo (IT); Metalchimica S.p.A., 64025 Scerne di Pineto, Teramo (IT)
(72) Inventor: SACCHINI, Fabrizio, 64025 Pineto, Teramo (IT); SACCHINI, Luca, I-64025 Pineto, Teramo (IT)
(74) Representative: Croce, Valeria

(57) **Abstract**

The present invention relates to a process for preparing plastic materials from recycled plastic materials, and to the use of such materials for the production of packaging.

## Description

### Background art

The production processes involving plastic materials and the use of packaging generate significant volumes of industrial and post-consumer waste to be sent to landfills.

Furthermore, obsolete unused packaging as well as decoration or assembly material generate other waste.

Such waste must be sent, as indicated by law, to external disposal companies.

For some years, however, the market demand has been felt for products made with recycled or second-life plastic, which appear more desirable to consumers for the environmental benefits which derive therefrom, but which shall have the same physical-chemical features of virgin materials.

The supply sources available today are very few and are capable of recovering plastics defined as "POST CIVIL CONSUMPTION" plastics, which are not suitable for making some types of packaging, such as, for example, primary extrusion-blown packaging, such as: bottles and tanks for containing both aggressive products as well as cosmetic-food products.

The reasons are mainly due to the following causes:
1. they show no constant performance for extrusion by blowing,
2. they are not suitably selected,
3. they emit bad smells which make the work environment uninhabitable and unhealthy,
4. they do not allow uniformity of color,
5. they do not guarantee chemical and mechanical resistance,
6. they are microbiologically contaminated.

There is therefore a need to develop new materials generated by new technologies from waste, which offer the same performance as materials obtained from virgin plastic materials and which do not have the drawbacks of the known materials.

### Summary of the invention

The authors of the present invention have surprisingly found how to prepare a plastic material from both industrial and/or post-consumer waste, which allows to overcome the drawbacks of the background art.

### Object of the invention

In a first object, the present invention describes a process for preparing a plastic material, which entirely derives from the recycling of plastic material waste.

In a second object, a process for preparing a plastic material is described, obtained from post-consumer and/or industrial waste.

The plastic materials obtained by the processes described are further objects of the present invention.

A further object is a method for preparing containers by using the materials of the invention.

### Detailed description of the invention

In a first object, the present invention describes a process for preparing a plastic material, which entirely derives from the recycling of plastic material from industrial waste and/or post-consumer waste.

In particular, the process of the invention comprises the steps of:
1) selecting industrial and/or post-consumer waste,
2) selecting said waste by category of compatible materials,
3) selecting said waste by color,
4) grinding said waste,
5) treating said waste to reduce smell,
6) treating said waste to reduce microbial load,
7) tempering in water,
8) regranulation,
9) dehumidification.

For the purposes of the present invention, step 1) concerns waste contaminated by bacteria, dirty with soil, mud, food residues, oil, solvents, detergents, soaps, etc.

In particular, industrial waste is represented by high-density polyethylene (HDPE) and high-molecular-weight polyethylene (HMWPE) materials.

The present invention may also be applied to low-molecular-weight polyethylene (LMWPE).

For the purposes of the present invention, the waste generated by the manufacturing processes of both single-layer polyethylene products as well as co-extruded products with EVA or nylon may also be used.

Preferably, industrial swarf is not included.

With regard to step 2) this comprises the separation of the materials by compatibility category, i.e., by high or low density and/or by high or low molecular weight.

To this end: the materials are divided depending on the intended use and, in particular, according to the blowing volume.

More specifically, high-density polyethylene will be used for preparing bottles with a capacity of up to 5 liters.

Instead, high-molecular-weight polyethylene will be used for preparing bottles with a capacity from 5 to 25 liters, or greater.

In one aspect of the present invention, at least 40% by weight, preferably at least 50% by weight and possibly up to 100% by weight is represented by polyethylene deriving from industrial waste and, for the reminder, from post-consumer waste.

Step 3), in which the materials are divided by color, may not even be carried out.

During step 4), the materials, divided by color, are shredded and ground.

Step 5), instead, comprises the reduction of the smell generated by the waste through an ozonation.

Step 6) comprises the reduction of the microbial load developed by the waste through an ozonation.

Step 7) comprises the tempering in water to eliminate the traces left by the processes of steps 5) and 6).

The regranulation step 8) occurs according to methods known in the field.

The dehumidification step 9) is carried out at 90°C with conventional dehumidifiers, preferably for 3 hours.

The granules thus obtained may be subjected to melting and blowing for preparing packaging according to the present invention.

In accordance with a second embodiment of the invention, the material may be obtained from post-consumer and industrial waste in a mixture.

For the purposes of the present invention, the plastic material is mixed with the corresponding plastic material; therefore, recycled post-consumer high-density polyethylene (i.e. from waste) will be mixed with recycled high-density polyethylene (i.e. from waste) of the industrial type, and recycled post-consumer high- and low-molecular-weight polyethylene (i.e. from waste) will be mixed with recycled high- and low-molecular-weight polyethylene (i.e. from waste) of the industrial type, respectively.

High-molecular-weight polyethylene from waste may be selected from the group comprising:
- MARLEX® 50100 (Marlex) - density 0.948 g/cm³ (ASTM D1505)
- ERACLENE BB82 (Versalis) - density 0.954 g/cm³ (ISP1183)
- other similar ones.

High-molecular-weight polyethylene from waste may be selected from the group comprising:
- SABIC® HDPE B5429 (Sabic) - density 954 kg/m³ (at 23°C, ASTM D1505)
- ERACLENE BB82 (Versalis) - density 0.954 g/cm³ (ISP1183)
- ERACLENE BC82 (Versalis) - density 0.954 g/cm³ (ISP1183)
- MARLEX® 5502 (Marlex) - density 0.955 g/cm³ (ASTM D1505)
- MARLEX® 50100 (Marlex) - density 0.948 g/cm³ (ASTM D1505)

In particular, such materials have the following properties:

| | **MFI (g/10min)** | | | **DENSITY (g/cm³)** | **MODULE (Mpa)** | **ESCR (h)** |
|---|---|---|---|---|---|---|
| | **190°/2.16 Kg** | **190°/5 kg** | **190°/21.6 kg** | | | |
| **ERACLENE BC 82** | 0.25 | 0.9 | - | 0.954 | 1200 | >60 |
| **MARLEX 5502** | 0.35 | - | 33 | 0.955 | 1370 | 45 |
| **LOTRèNE Q 5502 BN** | 0.35 | - | - | 0.955 | 1370 | 24 |
| **SABIC B5429** | 0.3 | - | 29 | 0.954 | 1150 | 90 |
| | | | | | | |
| **ERACLENE BB82** | - | 0.15 | - | 0.954 | 1200 | >750 |
| **MARLEX 50100** | - | - | 10 | 0.948 | 1200 | >600 |
| **LOTRèNE Q 50100** | 0.06 | - | - | 0.948 | 1170 | >600 |

According to an aspect of the present invention, step 3) comprises the coloring, by using suitable pigments.

According to an aspect of the present invention, step 8) leads to the production of a material with granules of the size of about 4.60 X 4.60 X 1.05 mm.

According to an aspect of the present invention, during step 1) the post-consumer waste material may be an amount of about 10-50% by weight.

The method of the present invention, depending on the step of selecting the raw materials, allows to obtain a material of 4 different colors.

In particular, the colors are the following:
1. White PE
2. Black PE
3. Gray PE screen printing
4. White Coex

For the purposes of the present invention, the materials are divided depending on the intended use and, in particular, according to the blowing volume.

More specifically, high-density polyethylene is preferably used for preparing bottles with a capacity of up to 5 liters.

Instead, high-molecular-weight polyethylene is preferably used for preparing bottles with a capacity from 5 to 25 liters, or greater.

Furthermore, within each selection, the material is selected by color, according to the needs and, in particular: white/transparent, colored which originate gray and black.

For the purposes of the present invention, the material deriving from post-consumer is preliminarily subjected to a step of appropriate treatment for the reduction of smell.

The material obtained in accordance with the present invention is used in methods for producing manufactured products and, in particular, packaging.

In one aspect of the invention, such packaging is obtained by an extrusion-blowing step.

According to a preferred aspect of the invention, such packaging products are bottles.

More specifically, such bottles may have a capacity of up to 5 liters or up to 25 liters, or greater.

As described above, high-density polyethylene is preferably used for preparing bottles with a capacity of up to 5 liters.

Instead, high-molecular-weight polyethylene is preferably used for preparing bottles with a capacity from 5 to 25 liters, or greater.

It is worth noting that the possible replacement of polyethylene with low-density polyethylene allows the preparation of pipes.

The packaging items, preferably represented by bottles or tubes, are all further objects of the present invention.

### EXAMPLE 1

The materials of the invention and the products obtained with such materials have been subjected to tests to assess the features thereof.

In particular, the samples have been subjected to the following analysis:
- Melt Flow Rate USO 1133 - Instrument: Melt Flow Tester 2000 CEAST)
- Density at 23°C (ISO 1183 - method B - Instrument: Mettler Toledo scale)
- Shore Hardness D (ISO 868:2005 - Shore Hardness Test Instrument)
- Determination of modulus of elasticity of flexion and flexural load (ISO 178:2013- Dynamometer instrument: Quasar 25 GALDABINI)

| **Sample A (first material)** | **Method** | **Measureme nt** | **SAMPLE 1** | **SAMPLE** 2 |
|---|---|---|---|---|
| Yield **load*** | ISO 178:2013 | MPa | - | **20** |
| **Elongation at yield*** | ISO 178:2013 | 0_{/0} | - | 2.2 |
| **Breaking load*** | ISO (178:2013 | MPa | - | **N.D.** |
| **Elongation at breaking*** | ISO 178:2013 | 0_{/0} | - | **N.D.** |
| **Modulus of elasticity*** | ISO 178:2013 | MPa | - | **2,588** |
| **Density** | ISO 1183:2013 | kg/dm³ | **0.945** | - |
| **MFR** | ISO 1133:2012 | g/10' | **32.4** | - |
| **MVR** | ISO 1133:2012 | cm³/₁0' | **41.0** | - |
| **Shore Hardness** | ISO 868:2005 | Shore D | - | **56** |

| | | | | |
|---|---|---|---|---|
| * The samples are obtained from a bottle of size 80X25X1 mm | | | | |

| **Sample B (first material)** | **Method** | **Measurem ent** | **SAMPLE 1** | **SAMPLE** 2 |
|---|---|---|---|---|
| **Yield load*** | ISO 178:2013 | MPa | - | **20** |
| **Elongation at yield*** | ISO 178:2013 | (Yo | - | **2.2** |
| **Breaking load^{*}** | ISO 178:2013 | MPa | - | - **N.D.** |
| **Elongation at breaking*** | ISO 178:2013_{%}. | | - | **N.D.** |
| **Modulus of elasticity*** | ISO 178:2013 | MPa | - | **2,365** |
| **Density** | ISO | kg/dm³ | **0.974** | - |
| **MFR** | ISO 1133:2012 | g/10' | **32.1** | - |
| **MVR** | ISO | cm³/₁0' | **39.2** | - |
| **Shore Hardness** | ISO 868:2005 | Shore D | - | **51** |

| | | | | |
|---|---|---|---|---|
| * The samples are obtained from a bottle of size 80X25X1 mm | | | | |

| **Sample C (first material)** | **Method** | **Measureme nt** | **SAMPLE 1** | **SAMPLE 2** |
|---|---|---|---|---|
| **Yield load^{*}** | ISO 178:2013 | MPa | - | **30** |
| **Elongation at yield*** | ISO 178:2013 | ⁽Yo | - | **4.4** |
| **Breaking load^{*}** | ISO 178:2013 | MPa | | **N.D.** |
| **Elongation at breaking*** | ISO 178.2013_{%}. | 178.2013_{%} | - | **N.D.** |
| **Modulus of elasticity*** | ISO 178:2013 | MPa | - | **1, 607** |
| **Density** | ISO | kg/dm³ | **0.956** | - |
| **MFR** | ISO 1133:2012 | g/10' | **32.4** | - |
| **MVR** | ISO | cm³/₁0' | **40.1** | - |
| **Shore Hardness** | ISO 868:2005 | Shore D | - | **57** |

| | | | | |
|---|---|---|---|---|
| * The samples are obtained from a bottle of size 80X25X1 mm | | | | |

By taking into consideration the above description, the advantages of the present invention will be immediately apparent to those skilled in the art.

In particular, the materials obtained, although produced from waste, do not have a bad smell, have a defined and commercially acceptable color.

Furthermore, the materials are workable and have excellent thermo-plastic features; in particular, they may be subjected to blowing processes for the production of packaging containers.

The materials obtained according to the present invention advantageously have a reduced environmental impact, by virtue of reusing plastic raw materials, thus reducing carbon dioxide emissions.

## Claims

1. A process for preparing a plastic material entirely deriving from industrial and/or post-consumer waste, comprising the steps of:
1) selecting industrial and/or post-consumer waste,
2) selecting said waste by category of compatible materials,
3) selecting said waste by color,
4) grinding said waste,
5) treating said ground waste to reduce smell,
6) treating said waste to reduce microbial load,
7) tempering in water,
8) regranulation,
9) dehumidification.

2. A process according to the preceding claim, wherein said waste is made of high-density polyethylene (HDPE), high-molecular-weight polyethylene (HMWPE) or low-molecular-weight polyethylene (LMWPE) .

3. A process for preparing a plastic material according to claim 1 or 2, wherein said step 5) and said step 6) are carried out by ozonation.

4. A process for preparing a plastic material according to any one of the preceding claims, wherein said step 8) is carried out for 3 hours at 90°C.

5. A process according to any one of the preceding claims, wherein at least 40% by weight, preferably at least 50% by weight and possibly up to 100% by weight is represented by polyethylene deriving from industrial waste and, for the reminder, from post-consumer waste.

6. A plastic material obtained by the process according to any one of the preceding claims.

7. A method for preparing packaging products comprising the step of subjecting the material according to the preceding claim to an extrusion-blowing process.

8. A method according to the preceding claim, wherein said packaging product has a capacity of up to 5 liters and is obtained with a plastic material which is high-density polyethylene.

9. A method according to claim 7, wherein said packaging product has a capacity from 5 to 25 liters, or higher, and it is obtained with a plastic material which is high-molecular-weight polyethylene.

10. A packaging product obtained according to the preceding claim.

11. A packaging product according to the preceding claim represented by a bottle.
